Europäisches Patentamt

**European Patent Office**

Office européen des brevets

(19)

(11) Numéro de publication : **0 161 197 B1**

(12) **FASCICULE DE BREVET EUROPÉEN**

(45) Date de publication du fascicule du brevet : **02.03.88**

(51) Int. Cl.⁴ : **B 23 D 47/02// B27G19/10**

(21) Numéro de dépôt : **85440026.4**

(22) Date de dépôt : **19.04.85**

(54) **Dispositif de fermeture des rainures d'une table d'une machine à scier.**

(30) Priorité : **24.04.84 FR 8406544**

(43) Date de publication de la demande :
**13.11.85 Bulletin 85/46**

(45) Mention de la délivrance du brevet :
**02.03.88 Bulletin 88/09**

(84) Etats contractants désignés :
**AT BE CH DE GB IT LI LU NL SE**

(56) Documents cités :
**DE-A- 2 641 255**
**DE-C- 473 897**
**FR-A- 2 163 157**
**US-A- 2 020 222**

(73) Titulaire : **SMID S.A., Société Anonyme dite:**
**54, rue Poincaré**
**F-68460 Lutterbach (FR)**

(72) Inventeur : **Erhard, Raymond**
**6, rue de la Carrière**
**F-68760 Willer-Sur-Thur (FR)**

(74) Mandataire : **Aubertin, François**
**Cabinet Lepage & Aubertin Innovations et Presta-**
**tions 4, rue de Haguenau**
**F-67000 Strasbourg (FR)**

## Description

L'invention concerne un dispositif de fermeture des rainures réalisées dans le dessus des tables avant et arrière d'une machine à scier des matériaux en plaques, ces rainures étant perpendiculaires au trait de scie.

Pour la coupe de matériaux en plaques, on connaît déjà des machines à scier comprenant un châssis, une table en amont de la lame de scie entraînée par un chariot de sciage et une table disposée en aval de cette même lame de scie. En général, pour couper des matériaux en plaques, on empile un certain nombre de plaques et la pile de plaques est maintenue par des pinces de serrage disposées à l'une des extrémités transversales de ladite pile. Ces pinces de serrage sont actionnées par un guide et font avancer la pile de plaques au fur et à mesure de leur coupe. Ces pinces de serrage se composent d'un bec supérieur prenant appui sur le dessus de la pile et d'un bec inférieur sur lequel est pressée par le bec supérieur la pile des plaques. En fonction de la largeur des plaques, la machine à scier peut comporter plusieurs pinces de serrage disposées parallèlement au plan médian de la machine à scier. Le ou les becs inférieurs se déplacent dans des rainures parallèles réalisées dans la table en amont ainsi que dans la table en aval. A l'emplacement de ces rainures, la pile de plaques n'est pas maintenue, notamment à proximité de la lame de scie. Or, en fonction de certaines conditions de coupes déterminées par les matériaux dont sont constitués les plaques et/ou les types de lames de scie, cette ouverture est préjudiciable à la qualité de la coupe et à la durée d'utilisation de la lame.

La présente invention a pour but de remédier à ces inconvénients. L'invention, telle qu'elle est caractérisée dans la revendication 1, résout le problème consistant à créer un dispositif de fermeture des rainures réalisées dans le dessus des tables avant et arrière d'une machine à scier des matériaux en plaques et dans lesquelles se déplacent les becs inférieurs des pinces de serrage dont chaque rainure comporte un obturateur actionné par des moyens moteurs et soumis à une course verticale pour s'emboîter dans la rainure de la table.

Les avantages obtenus grâce à cette invention consistent essentiellement en ce qu'à l'emplacement des rainures pour le passage des becs inférieurs des pinces de serrage, la pile des matériaux en plaques est soutenue sur toute sa largeur.

Les revendications 2 à 9 concernent des modes de réalisation préférés de l'invention.

L'invention est exposée ci-après plus en détail à l'aide de dessins représentant seulement un mode d'exécution.

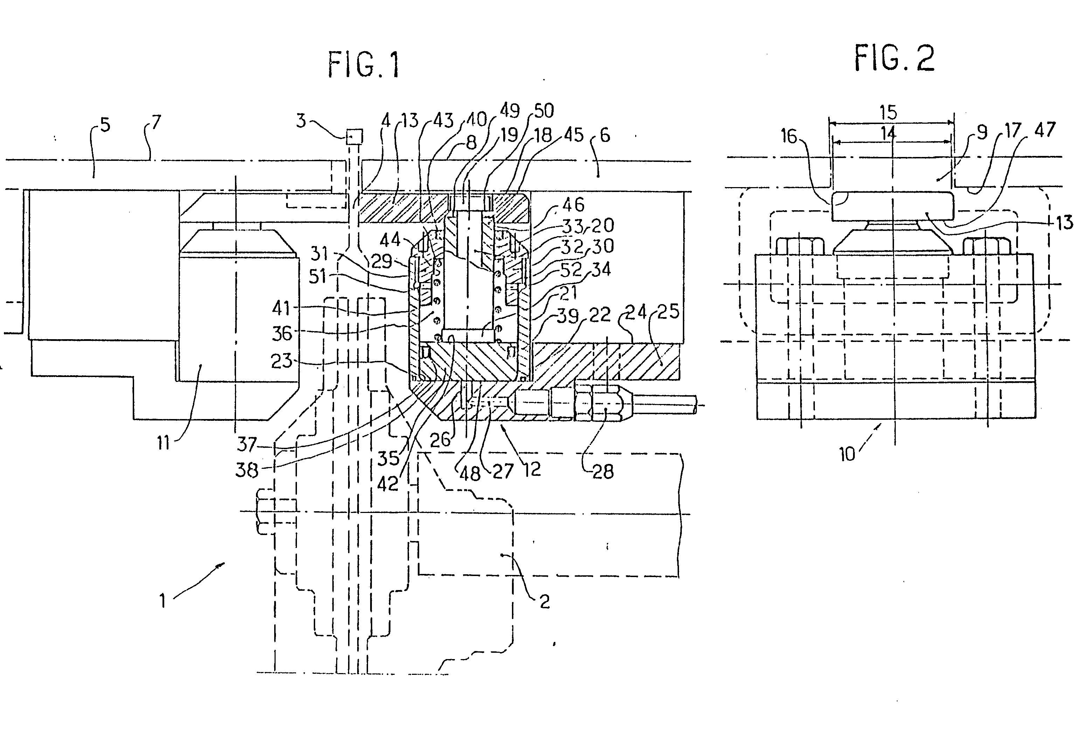

La figure 1 représente en vue en élévation une table d'une machine à scier comportant, conformément à l'invention, des dispositifs de fermeture des rainures des tables avant et arrière, l'un des dispositifs étant en vue externe et l'autre étant en vue en coupe.

La figure 2 représente en vue de gauche l'un des dispositifs de fermeture.

On se réfère aux deux figures.

La machine à scier 1 comporte un chariot de sciage 2 pourvu d'une lame de scie 3. Cette lame de scie 3 traverse une ligne de sciage 4 séparant une table avant 5 d'une table arrière 6. Dans le dessus 7, 8 de ces tables avant 5 et arrière 6 sont réalisées des rainures 9 devant permettre le passage de becs inférieurs des pinces de serrage (non représentées). Les différentes rainures 9 sont parallèles au plan médian longitudinal de la machine à scier 1. A proximité de la ligne de sciage 4, la machine à scier 1 comporte des dispositifs 10 permettant de fermer les rainures 9. Le nombre de dispositifs 10 est fonction du nombre de rainures 9 étnt entendu que chaque dispositif 10 est composé de deux ensembles identiques 11, 12.

Ci-dessous ne sera décrit qu'un seul ensemble 11.

Celui-ci comporte un obturateur 13 dont la largeur 14 est légèrement inférieure à la largeur 15 des rainures 9. Cet obturateur 13 est soumis à une course verticale se composant d'un point haut et d'un point bas. Lorsque l'obturateur 13 se trouve au point haut, son dessus 16 est à fleur avec le dessus 7, 8 des tables avant 5 et arrière 6. Lorsque l'obturateur 13 se trouve au point bas, le dessus 16 est légèrement inférieur au dessous 17 des tables avant 5 et arrière 6 pour ne pas gêner le déplacement du bec inférieur des pinces de serrage. On réalise dans le dessus 16 de l'obturateur 13 un orifice 18 dans lequel est noyée une tête 19 d'un axe de rappel 20. Cet axe de rappel 20 s'engage dans des moyens moteurs, de préférence pneumatiques.

Ces moyens moteurs sont un vérin pneumatique 21 dont le chant inférieur 22 pourvu d'un élément d'étanchéité 23 est solidaire du dessus 24 d'un support 25. Dans ce dernier sont pratiqués des canaux 26, 27 pour la circulation de l'air comprimé alimentant le vérin pneumatique 21. Ces canaux 26, 27 sont reliés par un raccord 28 au réseau d'air comprimé de la machine à scier 1. L'extrémité supérieure 29 du vérin pneumatique 21 comporte un trou taraudé 30 dans lequel on visse l'extrémité filetée 31 d'un couvercle 32. Ce couvercle 32 présente un orifice central 33 permettant le passage d'un piston 34 dans lequel est logé l'axe de rappel 20. Ce dernier est solidaire en translation avec le piston 34. Celui-ci comporte une tête 35 coulissant dans l'alésage 36 du vérin pneumatique 21. On réalise dans le pourtour 37 de la tête 35 une rainure 38 dans laquelle est logé un joint d'étanchéité 39. Par ailleurs, le couvercle 32 comporte également un joint d'étanchéité 40 assurant l'étanchéité entre le couvercle 32 et le piston 34. On enfile sur ce dernier un élément élastique 41 disposé entre la face supérieure 42 de la tête 35 du piston 34 et le fond 43 d'un alésage 44 réalisé dans le couvercle 32. L'extrémité supérieure 45 du piston 34 est engagée dans un logement 46 réalisé dans la face inférieure 47 de l'obturateur 13.

Le fonctionnement du dispositif de fermeture 10 est le suivant :

● On amène de l'air comprimé dans le vérin pneumatique 21 à travers les canaux 26, 27. Cet air comprimé exerce une pression sur le dessous 48 de la tête 35 du piston 34 en poussant ce dernier vers le haut. Au cours de sa course, le piston 34 comprime l'élément élastique 41 et l'extrémité supérieure 45 exerce une poussée sur le fond 49 du logement 46. De ce fait, on provoque le déplacement vertical vers le haut de l'obturateur 13 pour que son dessus 16 soit à fleur avec le dessus 7, 8 des tables avant 5 et arrière 6. En arrêtant l'arrivée de l'air comprimé et en mettant à l'air libre cette arrivée, l'air renfermé dans le vérin 21 est chassé sous l'action de l'élément élastique 41 qui, en se détendant, exerce une poussée vers le bas sur la face supérieure 42 de la tête 35 du piston 34. Afin de ne pas mettre le dessus du piston en dépression, sont prévus des trous 51, 52 réalisés dans le couvercle 32 qui permettent à l'air libre de pénétrer à l'intérieur du vérin 21. Celui-ci revient à sa position de repos en exerçant une traction sur l'axe de rappel 20. La tête 19 de ce dernier exerce une traction sur le fond 50 de l'orifice 18. De ce fait, on provoque l'effacement de l'obturateur 13 et la libération de la rainure 9 pour le déplacement du bec inférieur de la pince de serrage.

## Revendications

1. Dispositif dé fermeture des rainures (9) réalisées dans le dessus (7, 8) des tables avant (5) et arrière (6) d'une machine à scier (1) les matériaux en plaques, ces rainures (9) étant perpendiculaires au trait de scie, caractérisé en ce qu'il comporte, pour chaque rainure (9), un obturateur (13) actionné par des moyens moteurs (20, 21, 34) et soumis à une course verticale pour s'emboîter dans la rainure (9) de la table (5, 6).

2. Dispositf de fermeture des rainures selon la revendication 1, caractérisé en ce que les moyens moteurs sont un axe de rappel (20) dont la tête (19), logée dans un orifice (18) réalisé dans le dessus (16) de l'obturateur (13), exerce une traction sur le fond (50) dudit orifice (18) pour conférer à l'obturateur (13) sa position basse.

3. Dispositif de fermeture des rainures selon la revendication 1, caractérisé en ce que les moyens moteurs sont un vérin pneumatique (21), solidaire d'un support (25), dont le piston (34) est solidaire en translation avec l'axe de rappel (20).

4. Dispositif de fermeture des rainures selon la revendication 1, caractérisé en ce que les moyens moteurs sont un vérin pneumatique (21) comportant un élément élastique (41) interposé entre une tête (35) du piston (34) et le fond (43) d'un alésage (44) réalisé dans un couvercle (32) obturant le vérin pneumatique (21).

5. Dispositif de fermeture des rainures selon la revendication 4, caractérisé en ce que l'élément élastique (41) est en position de repos lorsque l'obturateur (13) est en position effacée.

6. Dispositif de fermeture des rainures selon la revendication 4, carctérisé en ce que l'élément élastique (41) est en position d'action lorsque l'obturateur (13) est en position haute.

7. Dispositif de fermeture des rainures selon la revendication 1, caractérisé en ce que l'obturateur (13) comporte une largeur (14) légèrement inférieure à la largeur (15) de la rainure (9).

8. Dispositif de fermeture des rainures selon la revendication 1, caractérisé en ce que la course verticale est telle que lorsque l'obturateur (13) est en position haute, son dessus (16) est à fleur avec le dessus (7, 8) des tables (5, 6) et qu'en position basse, ce dessus (16) est inférieur au dessous (17) des tables (5, 6).

9. Dispositif de fermeture des rainures selon la revendication 4, caractérisé en ce que le couvercle (32) comporte des trous (51, 52) à travers lesquels l'air libre peut s'introduire dans le vérin pneumatique (21).

## Claims

1. Closing device for the apertures (9) cut into the upper surfaces (7, 8) of the front (5) and rear (6) benches of a machine (1) for sawing materials in sheet form, these apertures or grooves (9) being perpendicular to the saw cut, characterised by the fact that it comprises, for each groove (9), a blind flange (13) activated by mechanisms (20, 21, 34) and subjected to a vertical thrust so as to fit into the groove (9) of the bench (5, 6).

2. Closing device for the apertures (9) in accordance with Claim 1, characterised by the fact that the mechanisms are : a pullback rod (20) the head (19) of which, housed in an orifice (18) set into the upper surface (16) of the blind flange (13), exerts traction on the bottom (50) of the said orifice (18) so as to move the blind flange (13) into its lowest position.

3. Closing device for the apertures in accordance with Claim 1, characterised by the fact that the mechanisms are : a pneumatic jack (21) integral with a support (25), the piston (34) of which is solidly anchored to the pullback rod (20).

4. Closing device for the apertures in accordance with Claim 1, characterised by the fact that the mechanisms are : a pneumatic jack (21) comprising a flexible unit (41) placed between the head (35) of the piston (34) and the bottom (43) of a bore (44) drilled in a cover (32) closing the pneumatic jack (21).

5. Closing device for the apertures in accordance with Claim 4, characterised by the fact that the flexible unit (41) is in the neutral position when the blind flange (13) is in the clear position.

6. Closing device for the apertures in accordance with Claim 4, characterised by the fact that the flexible unit (41) is in the active position when the blind flange (13) is in the elevated position.

7. Closing device for the apertures in accordance with Claim 1, characterised by the fact that the blind flange (13) comprises a width (14) slightly inferior to the width (15) of the groove (9).

8. Closing device for the apertures in accordance with Claim 1, characterised by the fact that the vertical thrust is such that when the blind flange (13) is in the elevated position, its upper .surface (16) is flush with the upper surfaces (7, 8) of the benches (5, 6) and, when in the lowest position, its upper surface (16) is lower than the underside (17) of the benches (5, 6).

9. Closing device for the apertures in accordance with Claim 4, characterised by the fact that the cover (32) comprises holes (51, 52) through which the free air may enter the pneumatic jack (21).

## Patentansprüche

1. Vorrichtung zum Schließen der Spalte (9), die auf dem oberen Teil (7, 8) des vorderen und hinteren Tisches (5 bzw. 6) einer Maschine zum Sägen von Platten ausgebildet sind und senkrecht zur Sägeschnittriefe verlaufen, dadurch gekennzeichnet, daß die Vorrichtung für jede Spalte (9) einen Verschluß (13) aufweist, der durch Antriebsmittel (20, 21, 34) betätigt und einem senkrecht verlaufendem Hub ausgesetzt wird, um sich in die Spalte (9) des Tisches (5, 6) einzupassen.

2. Vorrichtung nach Anspruch 1, dadurch gekennzeichnet, daß die Antriebselemente eine Rückstellwelle (20) aufweisen, dessen Kopf (19), der in einer im oberen Teil (16) des Verschlusses (13) ausgebildeten Öffnung (18) sitzt, einen Zug auf den Boden (50) der Öffnung (18) ausübt, um dem Verschluß (13) seine untere Stellung anzuweisen.

3. Vorrichtung nach Anspruch 1, dadurch gekennzeichnet, daß als Antriebselement ein Pneumatikzylinder (21) vermwendet wird, der mit einer Auflage (25) und dessen Kolben (34) parallel verschiebbar mit der Rückstellwelle (20) verbunden ist.

4. Vorrichtung nach Anspruch 1, dadurch gekennzeichnet, daß als Antriebselement ein Pneumatikzylinder (21) verwendet wird, der ein elastisches Teil (41) besitzt, das zwischen dem Kopf (35) des Kolbens (34) und dem Boden (43) der Bohrung (44) liegt, die in einem Deckel (32) ausgebildet ist, die den Pneumatikzylinder (21) verschließt.

5. Vorrichtung nach Anspruch 4, dadurch gekennzeichnet, daß das elastische Teil (41) in Ruhestellung ist, wenn der Verschluß (13) in eingezogener Stellung ist.

6. Vorrichtung nach Anspruch 4, dadurch gekennzeichnet, daß das elastische Teil (41) in Betätigungsstellung ist, wenn sich der Verschluß (13) in Hochstellung befindet.

7. Vorrichtung nach Anspruch 1, dadurch gekennzeichnet, daß der Verschluß (13) eine Breite (14) hat, die geringfügig unter der Breite (15) der Spalte (9) liegt.

8. Vorrichtung nach Anspruch 1, dadurch gekennzeichnet, daß der senkrechte Hub derart ist, daß bei dem Verschluß (13) in Hochstellung sein oberer Teil (16) in derselben Höhe mit dem oberen Teil (7, 8) der Tischteile (5, 6) liegt und daß in der Niedrigstellung der obere Teil unter dem unteren Teil (17) der Tischteile (5, 6) liegt.

· 9. Vorrichtung nach Anspruch 4, dadurch gekennzeichnet, daß der Deckel (32) Löcher (51, 52) aufweist, durch die Umgebungsluft in den Pneumatikzylinder (21) eindringen kann.

FIG.1

FIG.2

0 161 197